# EUROPÄISCHE PATENTSCHRIFT

(11) **EP 0 884 478 B1**
(45) Veröffentlichungstag und Bekanntmachung des Hinweises auf die Patenterteilung: **06.08.2003**
(21) Anmeldenummer: 97810366.1
(22) Anmeldetag: 12.06.1997
(51) Int. Cl.: F04C 27/00, F04C 29/02, F16J 15/34, F16N 7/40

(54) **Schmier- und Sperrsystem für Verdichter**
Lubricating and barrier system for compressor
Système de lubrification et de barrage pour compresseur

(43) Veröffentlichungstag der Anmeldung: 16.12.1998
(73) Patentinhaber: Axima Refrigeration GmbH, 88131 Lindau (DE)
(72) Erfinder: Elmar, Stark, 6922 Wolfurt (AT)
(74) Vertreter: Heinen, Detlef

(56) Entgegenhaltungen:
- EP-A- 0 156 096
- DE-A- 3 007 267
- DE-U- 9 318 068
- FR-A- 2 191 687
- US-A- 2 677 944
- US-A- 2 853 020

## Beschreibung

Die Erfindung handelt von einem Schmier- und Sperrsystem für Verdichter, insbesondere für Kältemittelverdichter, die mit ihrem Gehäuse einem Systemdruck eines Kältemittels ausgesetzt sind und die mit einem, durch den Kontakt zum Kältemittel verdünnten Schmier- und Sperröl an Wellendurchgängen zum Gehäuse an Lagern geschmiert und mit einer Wellenabdichtung gegen einen Durchbruch von Kältemittel abgedichtet sind, wobei während des Betriebes des Verdichters eine Ölpumpe den Druck im Sperrsystem mittels einer Zulaufleitung über den Systemdruck im Gehäuse anhebt und die Wellendichtung ständig mit Sperröl versorgt.

Wellendichtungen, wie z.B. in der DE 3 007 267 A1 für Wälzkolbenpumpen beschrieben, sind in den verschiedensten Ausführungsformen bekannt und unter anderem auch zum Einsatz in Kältemittelverdichtern bestens geeignet. Bei Kältemittelverdichtern muss oft aus Kostengründen das gleiche Öl als Schmieröl und Sperröl verwendet werden. Viele dieser Öle nehmen Kältemittel auf und verändern ihre Viskosität durch das gelöste Kältemittel. Das Schmierverhalten eines solchen Öls hängt somit stark von der momentanen Temperatur von dem momentan gelösten Anteil an Kältemittel ab. Dieser Umstand führt gerade beim Start einer solchen Anlage dazu, dass der Schmierfilm an den Wellendichtungen abreisst und einen erhöhten Verschleiss auslöst. Zum einen schäumt das Schmier- und Sperröl auf und zum anderen verschlechtert es seine Schmiereigenschaften.

Es ist daher Aufgabe der vorliegenden Erfindung zu einem sicheren Betrieb von solchen Verdichtern zu führen. Diese Aufgabe wird mit den Kennzeichen vom unabhängigen Anspruch 1 dadurch gelöst, dass in der Zulaufleitung zunächst eine Schmierölleitung mit einer Drosselstelle zum Lager abzweigt und anschliessend zur Wellendichtung ein Rückschlagventil eingebaut ist, dass die Wellendichtung als doppelt wirkende Wellendichtung gegen Aussen und Innen konzipiert ist und dass ein Zwischenraum zwischen den Dichtungen über zwei getrennte Ablaufleitungen mit einem geodätisch höher stehenden Vorratsbehälter verbunden ist, wobei eine erste Ablaufleitung im oberen Bereich des Vorratsbehälters einmündet und von dort als Rücklaufleitung in einen mit dem Gehäuse verbundenen Vorlagebehälter weitergeführt ist, während eine zweite Ablaufleitung im unteren Bereich des Vorratsbehälters einmündet, um bei Stillstand der Pumpe einen über die zweite Ablaufleitung nachfliessenden Ölvorrat über den Dichtungen stehen zu haben.

Diese Lösung hat den Vorteil, dass sie mit geringen konstruktiven Aenderungen d.h. kostengünstig durchführbar ist und auch bei schon bestehenden Anlagen nachgerüstet werden kann. Es wird ein ständiger und weitgehend blasenfreier Ölvorrat geschaffen, der beim Start auch nach kurzzeitigen Unterbrüchen für die Wellendichtungen zur Verfügung steht und verhindert, dass die rotierenden Wellendichtungen in ihren Gehäusen zu Schaumschlägern werden.

Die abhängigen Ansprüche 2 bis 10 stellen vorteilhafte Weiterbildungen der Erfindung dar. So ist es vorteilhaft, die beiden Ablaufleitungen so im Zwischenraum der Wellendichtungen anzuordnen, dass bei Betrieb an der ersten Ablaufleitung ein höherer Förderdruck ansteht und Gasblasen mitgenommen werden, während beim Abstellen der Anlage die noch verbleibenden Gasblasen durch die erste Ablaufleitung in den oberen Bereich vom Vorratsbehälter aufsteigen und blasenfreies Öl durch die zweite Ablaufleitung in umgekehrter Richtung nachfliesst. Beim Start ist der Zwischenraum der Wellendichtungen zunächst frei von Gasblasen, was die Schaumbildung verringert.

Im weiteren ist es vorteilhaft, den im Vorratsbehälter 15 anfallenden Schaum möglichst schnell abzusaugen. Die erste Ablaufleitung führt daher als Tangentialeinlauf in den Vorratsbehälter, um eine Art Zyklon zu bilden, bei dem die leichteren Bestandteile zur Mitte wandern, und die Rücklaufleitung aus dem Vorratsbehälter ist mittig mit ihrem Einlauf angeordnet, um zuerst die leichteren Bestandteile abzusaugen. Die Lage von diesem letzteren Einlauf bestimmt das Flüssigkeitsniveau im Vorratsbehälter. Der Ölvorrat im Vorratsbehälter und der Querschnitt der zweiten Ablaufleitung können so aufeinander abgestimmt werden, dass beim Abstellen der Maschine oder bei Stromausfall genügend entgastes Öl zu den Wellendichtungen zurückfliesst.

Mit diesem System hat sich gezeigt, dass es bei kleineren Verdichtern ausreicht, die Wellendichtung nach innen als Lippendichtung-auszuführen.

Bei mehreren Verdichtern, die parallel mit dem gleichen Saugdruck arbeiten wie zum Beispiel parallel arbeitende volumetrische Kolben- und Schraubenverdichter, ist es möglich ein gemeinsames Schmier- und Sperrsystem der aufgezeigten Art zu verwenden. Dadurch, dass solche Verdichter in der Regel nacheinander gestartet werden, entsteht bei gleichem anteilmässigen Ölvolumen eine höhere Sicherheit für den einzelnen Verdichter.

Im folgenden wird die Erfindung anhand von Beispielen beschrieben. Es zeigen:
- Fig. 1: Schematisch ein erfindungsgemässes Schmier- und Sperrsystem mit einer Doppelgleitringdichtung;
- Fig. 2: schematisch für eine Anordnung von Fig. 1 ein Wellenlager in Form eines Wälzlagers und eine Lippendichtung und eine Gleitringdichtung als doppelte Wellendichtung;
- Fig. 3: schematisch einen Längsschnitt durch eine Anordnung, bei der der Vorratsbehälter zusammen mit dem Gehäuse für die Wellendichtungen als Gussteil in das Gehäuse eines Verdichters integriert ist.

In den Figuren ist ein Schmier- und Sperrsystem für Verdichter, insbesondere für Kältemittelverdichter gezeigt, die mit einem mit Kältemittel versetztem Schmier- und Sperröl über eine Pumpe 8 versorgt werden. Durch ein Rückschlagventil 21 in der Zulaufleitung 9 zu den Wellendichtungen 1, 2 sowie durch zwei vom Dichtungsgehäuse 12 in einen höher gelegenen Vorratsbehälter 15 auf unterschiedlichem Niveau einmündende Ablaufleitungen 13, 14 wird erreicht, dass immer ein Ölvorrat über den Dichtungen vorhanden ist. Dadurch, dass Gasblasen bevorzugt in einer der beiden Ablaufleitungen 13, 14 aufsteigen, wird das Öl im Gehäuse 12 der Wellendichtungen im Betrieb und im Stillstand entgast und ein Aufschäumen vom Öl beim Start weitgehend verhindert.

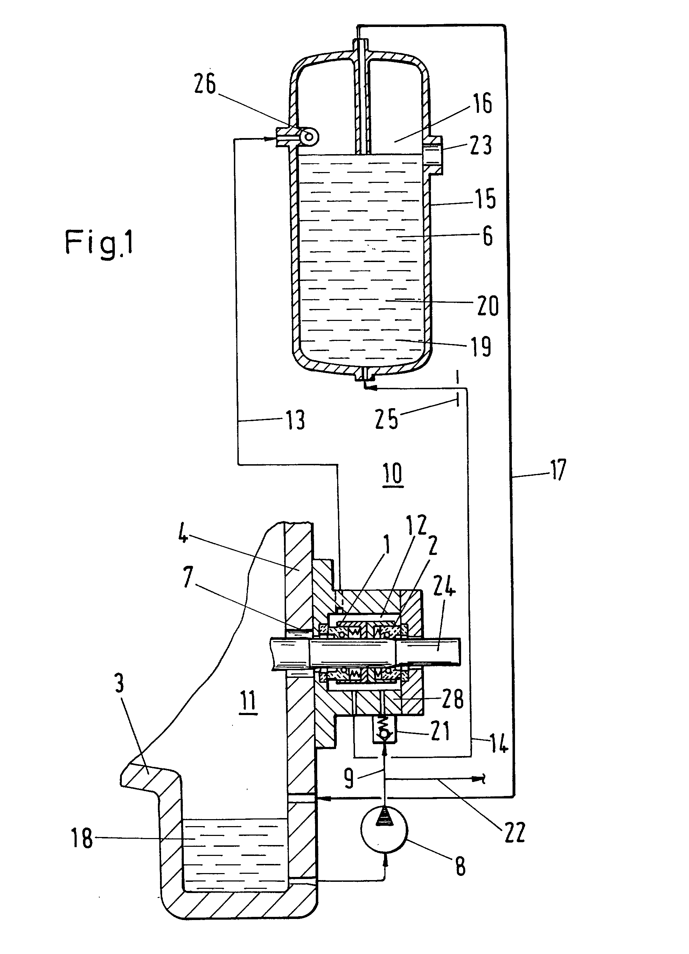

In Fig. 1 fördert eine Ölpumpe 8, deren Antrieb über eine Verdichterwelle 24 erfolgen kann, Schmier- und Sperröl aus einem Vorlagebehälter 18, der dem Saugdruck auf der Verdichterinnenseite 11 ausgesetzt ist, in eine Zulaufleitung 9, von der eine Schmierölleitung 22 für ein Lager abzweigt. Vor dem Eintritt in das Gehäuse 12 der Wellendichtungen 1, 2 ist ein Rückschlagventil 21 installiert, welches im Stillstand der Pumpe 8 ein Rückfliessen verhindert. Im oberen Bereich des Dichtungsgehäuses 12 zweigt eine erste Ablaufleitung 13 ab. Durch ihren tangentialen Abgang schält sie einen Teil der rotierenden Strömung während des Betriebes ab, welcher in dem höher gelegenen Vorratsbehälter 15 tangential 26 auf der Höhe des Flüssigkeitsspiegels einströmt. Eine zweite Ablaufleitung 14, deren engster Querschnitt 25 nur ein Bruchteil des Querschnitts der ersten Ablaufleitung 13 ausmacht, zweigt im unteren Bereich des Dichtungsgehäuses 12 ab und mündet in den unteren Bereich vom Vorratsbehälter 15. Während des Betriebes fliesst durch diese zweite Ablaufleitung 14 ein kleiner Ölstrom weitgehend ohne Gasblasen. Beim Abschalten und Auslaufen des Verdichters werden weitere Gasblasen, welche sich während des Betriebes in den rotierenden Hohlräumen im Dichtungsgehäuse 12 angesammelt haben, frei gesetzt. Diese gelangen mit ihrem Auftrieb und weil über die zweite Ablaufleitung Öl in umgekehrter Richtung in das Dichtungsgehäuse 12 zurückfliessen kann, in den Vorratsbehälter 15, dessen Flüssigkeitsspiegel ein wenig sinkt. Beim nächsten Start befindet sich Öl ohne Gasblasen im Dichtungsgehäuse 12 und ein Aufschäumen vom Öl, das mit dem rotierenden Teilen wie beim Schlagen von Eiweiss durch Eintragen von kleinen Gasbläschen, die sich nur langsam auflösen, entsteht, wird weitgehend unterbunden. Aufschäumendes Öl in einer Gleitringdichtung verschlechtert die Schmierung und den Abtransport von Wärme. Vom Vorratsbehälter 15 führt eine Rücklaufleitung 17 in den Vorlagebehälter 18 zurück. Der Vorratsbehälter 15 ist als Zylinder ausgeführt. In dessen Achse taucht die Rücklaufleitung 17 in den Zylinder ein und bestimmt mit ihrem Einlauf das Niveau vom Flüssigkeitsspiegel während des Betriebes. In der Rücklaufleitung 17 kann noch ein Druckhalteventil vorgesehen sein, das eine weitere Erhöhung des (durch die Ölpumpe 8 erzeugten) Sperrdrucks gegenüber dem (auf der Verdichterinnenseite 11 herrschenden) Systemdruck erlaubt. Die erste Ablaufleitung 13 mündet tangential in den Vorratsbehälter 15 und erzeugt eine rotierende Strömung, welche Gasblasen bevorzugt zur Mitte zum Rücklaufrohr 17 treibt und für eine kürzere Verweilzeit der Gasblasen im Vorratsbehälter 15 sorgt. Es sammelt sich daher im unteren Bereich 19 des Vorratsbehälters 15 ein Ölvorrat 20 an Sperröl 6, das weitgehend blasenfrei ist, während der obere Bereich 16 gasgefüllt ist.

Der Ölvorrat 20 gibt auch bei langen Stillstandszeiten die Sicherheit, dass kleine Leckagen der Wellendichtungen ausgeglichen werden. Mit einer Niveauüberwachung 23 des Flüssigkeitsspiegels im Vorratsbehälter 15 kann zusätzlich ein Signal gewonnen werden, das beispielsweise als Startverriegelung als Anzeige oder Abschaltung benutzt wird.

Die Wellendichtungen 1, 2 sind als Doppelgleitringdichtung ausgeführt. Der rotierende Teil ist jeweils auf der Welle 24 befestigt, die durch einen Wellendurchgang 7 im Verdichtergehäuse 4 herausragt. Die eine Dichtung 1 hält den Druck im Dichtungsgehäuse 12 gegen Innen 11, die andere Dichtung 2 hält den Druck im Dichtungsgehäuse 12 gegen Aussen 10.

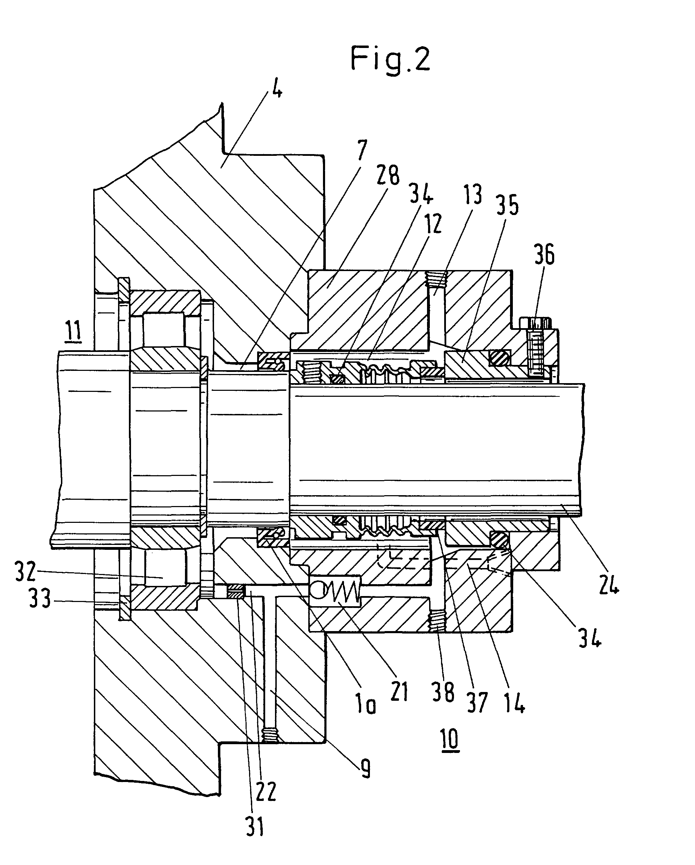

In Fig. 2 hält eine Lippendichtung 1a den Druck im Dichtungsgehäuse 12 gegen Innen 11 und eine Gleitringdichtung gegen Aussen 10. Der rotierende Teil der Gleitringdichtung ist mit einer Befestigungsschraube auf der Welle 24 gesichert und durch einen O-Ring 34 abgedichtet. Über einen Faltenbalg wird ein axial beweglicher Gleitring 37 gehalten, der gegen einen stationären Ring dichtet, welcher seinerseits über einen O-Ring 34 gegen das Gehäuse 12 abgedichtet und durch eine Schraube 36 gegen Drehung gesichert ist. Der in der Zulaufleitung 9 ankommende Schmier- und Sperrölstrom teilt sich auf. Eine Abzweigung 22 führt zu einem Wälzlager 32 mit Sicherungsring 33, wobei die Menge durch eine Drosselstelle 31 begrenzt wird. Es hat sich nämlich gezeigt, dass eine Lippendichtung bei den für Wälzlager üblichen Umfangsgeschwindigkeiten ausreichend ist, wenn eine in Fig. 1 beschriebene Anordnung verwendet wird. Die andere Abzweigung führt über den Rückschlagventil 21 in den Innenraum 12. Im Gehäusemantel 28 sind oben die erste Ablaufleitung 13 und unten die zweite Ablaufleitung 14 gezeigt. Überflüssige Bohrlöcher sind mit Stopfen 38 verschlossen.

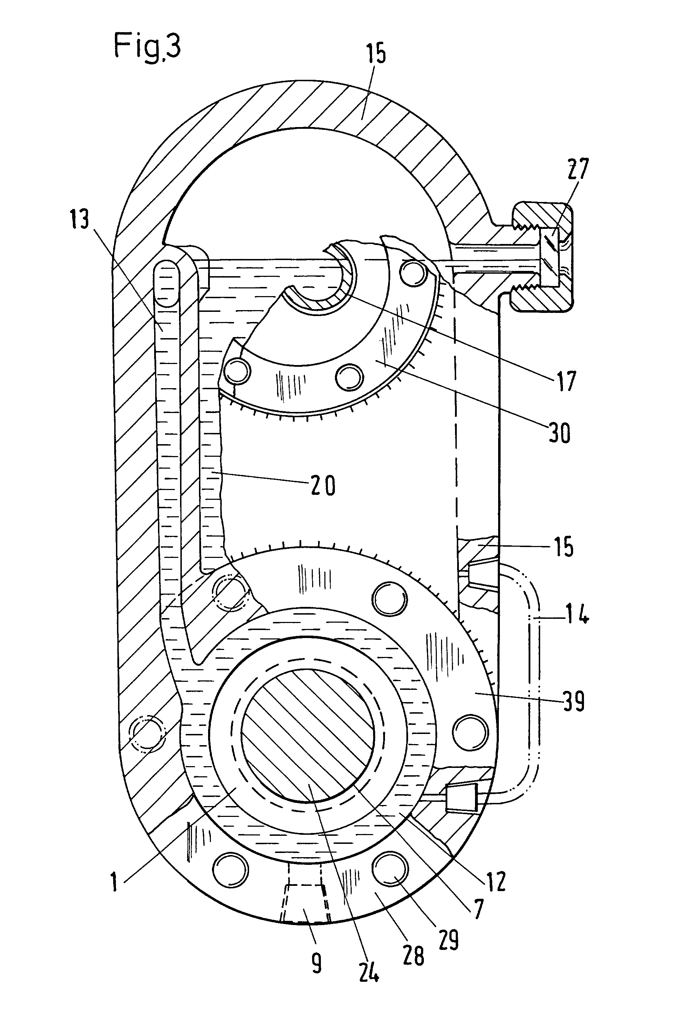

In Fig. 3 zeigt die Gusskonstruktion ein Dichtungsgehäuse 28, das einstückig mit einem Vorratsbehälter 15 verbunden ist. Der Vorratsbehälter ist auf der Stirnseite durch einen Deckel 30 abgeschlossen der auch die Rücklaufleitung 17 enthält. Zur Niveaukontrolle ist ein Schauglas 27 angebracht. Ein erster Verbindungskanal 13 verbindet den Dichtungsraum 12 mit dem Vorratsbehälter 15 auf der Höhe des Flüssigkeitsspiegels. Im Schnitt ist die Welle 24 und eine Wellendichtung 1 erkennbar, welche den Wellendurchgang 7 in das Dichtungsgehäuse 12 verschliesst. Auf einem Flansch 39 des Dichtungsgehäuses wird ein Deckel mit dem stationären Teil der zweiten Wellendichtung aufgesetzt. Eine zweite Ablaufleitung 14 überbrückt eine Zwischenwand zwischen dem Dichtungsgehäuse 12 und dem Vorratsbehälter 15. Sie kann auch durch eine Bohrung in der Zwischenwand ersetzt werden.

## Patentansprüche

1. Schmier- und Sperrsystem für Verdichter, insbesondere für Kältemittelverdichter (3), die mit ihrem Gehäuse (4) einem Systemdruck eines Kältemittels (5) ausgesetzt sind und die mit einem, durch den Kontakt zum Kältemittel (5) verdünnten Schmier- und Sperröl (6) an Wellendurchgängen (7) zum Gehäuse an Lagern (32) geschmiert und mit einer Wellenabdichtung (1, 2) gegen einen Durchbruch von Kältemittel (5) abgedichtet sind, wobei während des Betriebes des Verdichters (3) eine Ölpumpe (8) den Druck im Sperrsystem mittels einer Zulaufleitung (9) über den Systemdruck im Gehäuse (4) anhebt und die Wellendichtung (1, 2) ständig mit Sperröl (6) versorgt, **dadurch gekennzeichnet, dass** in der Zulaufleitung (9) zunächst eine Schmierölleitung (22) mit einer Drosselstelle (31) zum Lager (32) abzweigt und anschliessend zur Wellendichtung (1, 2) ein Rückschlagventil (21) eingebaut ist, dass die Wellendichtung (1, 2) als doppelt wirkende Wellendichtung gegen Aussen (10) und Innen (11) konzipiert ist und dass ein Zwischenraum (12) zwischen den Dichtungen (1, 2) über zwei getrennte Ablaufleitungen (13, 14) mit einem geodätisch höher stehenden Vorratsbehälter (15) verbunden ist, wobei eine erste-Ablaufleitung (13) im oberen Bereich (16) des Vorratsbehälters (15) einmündet und von dort als Rücklaufleitung (17) in einen mit dem Gehäuse (4) verbundenen Vorlagebehälter (18) weitergeführt ist, während eine zweite Ablaufleitung (14) im unteren Bereich (19) des Vorratsbehälters (15) einmündet, um bei Stillstand der Pumpe einen über die zweite Ablaufleitung nachfliessenden Ölvorrat (20) über den Dichtungen (1, 2) stehen zu haben.

2. Schmier- und Sperrsystem nach Anspruch 1, **dadurch gekennzeichnet, dass** die erste Ablaufleitung (13) im oberen Teil des Zwischenraums (12) wegführt, um stehende Gasblasen zu verhindern, während die zweite Ablaufleitung (14) im unteren Teil des Zwischenraums (12) wegführt, um bei Stillstand eine Ölsäule ohne Gasblasen im unteren Teil des Zwischenraumes anstehend zu haben.

3. Schmier- und Sperrsystem nach einem der Ansprüche 1 oder 2, **dadurch gekennzeichnet, dass** ein engster Querschnitt (25) der zweiten Ablaufleitung (14) weniger als die Hälfte eines engsten Querschnitts der ersten Ablaufleitung (13) beträgt.

4. Schmier- und Sperrsystem nach Anspruch 3, **dadurch gekennzeichnet, dass** der Ölvorrat (20) im Vorratsbehälter (15) und der engste Querschnitt der zweiten Ablaufleitung (14) so aufeinander abgestimmt sind, dass bei Stillstand und vollständigem Versagen der Dichtung (2) nach Innen (11) der Ölvorrat (20) mehr als 30 Sekunden benötigt, um sich in den Zwischenraum (12) zu entleeren.

5. Schmier- und Sperrsystem nach einem der Ansprüche 1 bis 4, **dadurch gekennzeichnet, dass** der Vorratsbehälter einen Tangentialeinlauf (26) für die erste Ablaufleitung (13) aufweist, um einen Zyklon zu erzeugen und dass die Ablaufleitung (17) mittig angeordnet ist, um die leichteren Bestandteile schneller abzusaugen.

6. Schmier- und Sperrsystem nach einem der Ansprüche 1 bis 5, **dadurch gekennzeichnet, dass** eine Niveauüberwachung (23) im Vorratsbehälter (15) eingebaut ist, die ein Signal zur Startverhinderung oder zur Abschaltung des Verdichters (3) erzeugt.

7. Schmier- und Sperrsystem nach einem der Ansprüche 1 bis 4, **dadurch gekennzeichnet, dass** zur Erhöhung des Sperrdrucks über den Systemdruck ein Druckhalteventil in der Rücklaufleitung (17) eingebaut ist.

8. Schmier- und Sperrsystem nach einem der Ansprüche 1 bis 7, **dadurch gekennzeichnet, dass** die Dichtung nach Innen (11) als Lippendichtung (1a) und die Dichtung nach Aussen (10) als Gleitringdichtung ausgeführt ist.

9. Schmier- und Sperrsystem nach einem der Ansprüche 1 bis 7, **dadurch gekennzeichnet, dass** die Dichtung (1, 2) als doppelte Gleitringdichtung ausgeführt ist.

10. Schmier- und Sperrsystem nach einem der Ansprüche 1 bis 9, **dadurch gekennzeichnet, dass** mehrere Verdichter, die an den Wellendurchgängen (7) dem gleichen Systemdruck eines Kältemittels (5) ausgesetzt sind, mit ihren Ablaufleitungen (13, 14) an einem gemeinsamen Vorratsbehälter angeschlossen sind und einen gemeinsamen Vorlagebehälter (18) besitzen.

11. Kältemittelverdichter mit einem Schmier- und Sperrsystem nach einem der Ansprüche 1 bis 10.

## Claims

1. Lubricating and blocking system for compressors, in particular for refrigerant compressors (3), the housing (4) of which is exposed to a system pressure of a refrigerant (5) and which are lubricated with a lubricating and blocking oil (6) at bearings (32) at shaft lead-throughs (7) to the housing which are sealed by a shaft seal (1, 2) against a break through of refrigerant (5), the lubricating and blocking oil being diluted by contact with the refrigerant (5), wherein, during the operation of the compressor (3), an oil pump (8) raises the pressure in the blocking system by means of a feed line (9) above the system pressure in the housing (4) and continually supplies the shaft seal (1, 2) with blocking oil (6), **characterized in that**, in the feed line (9), a lubricating oil line (21) with a restrictor position first of all branches off to the bearing (32) and then a non-return valve (21) is built in towards the shaft seal (1, 2); **in that** the shaft seal (1, 2) is designed as a double acting shaft seal acting towards the outside (10) and the inside (11) and **in that** an intermediate space (12) between the seals (1, 2) is connected via two separate discharge lines (13, 14) to a geodetically higher supply container (15), with the first discharge line (13) opening into the upper region (16) of the supply container (15) and being led on from there as a return line (17) into a precontainer (18) connected to the housing (4), whereas a second discharge line (14) opens into the lower region (19) of the supply container (15) in order, when the pump is stationary, to have an oil supply (20) available above the seals (1, 2) which flows in via the second discharge line.

2. Lubricating and blocking system in accordance with claim 1, **characterized in that** the first discharge line (13) leads away from the upper part of the intermediate space (12) in order to prevent standing gas bubbles whereas the second discharge line (14) leads away from the lower part of the intermediate space (12) in order to have an oil column without gas bubbles waiting in the lower part of the intermediate space when stationary.

3. Lubricating and blocking system in accordance with one of the claims 1 or 2, **characterized in that** a narrowest cross-section (25) of the second discharge line (14) amounts to less than one half of the narrowest cross-section of the first discharge line (13).

4. Lubricating and blocking system in accordance with claim 3, **characterized in that** the oil supply (20) in the supply container (15) and the narrowest cross-section of the second discharge line (14) are so matched to one another that, when stationary and with complete failure of the seal (2) towards the inside (11), the oil supply (20) requires more than 30 seconds in order to empty into the intermediate space (12).

5. Lubricating and blocking system in accordance with the one of the claims 1 to 4, **characterized in that** the supply container has an tangential inlet (26) for the first discharge line (13) in order to produce a cyclone and **in that** the discharge line (17) is centrally arranged in order to suck away the lighter components more quickly.

6. Lubricating and blocking system in accordance with one of the claims 1 to 5, **characterized in that** a level monitoring system (23) is built into the supply container (15) and produces a signal to prevent the start of the compressor (3) or to switch off the compressor (3).

7. Lubricating and blocking system in accordance with one of the claims 1 to 4, **characterized in that** a pressure retaining valve is built into the return line (17) in order to increase the blocking pressure to above the system pressure.

8. Lubricating and blocking system in accordance with one of the claims 1 to 7, **characterized in that** the seal towards the inside (11) is designed as a lip seal (1 a) and the seal towards the outside (10) is designed as a slide ring seal.

9. Lubricating and blocking system in accordance with one of the claims 1 to 7, **characterized in that** the seal (1, 2) is designed as a double slide ring seal.

10. Lubricating and blocking system in accordance with one of the claims 1 to 9, **characterized in that** a plurality of compressors which are exposed at the shaft lead throughs (7) to the same system pressure of a refrigerant (5) have their discharge lines (13, 14) connected to a common supply container and have a common precontainer (18).

11. Refrigerant compressor having a lubricating and blocking system in accordance with one of the claims 1 to 10.

## Revendications

1. Système de graissage et de blocage pour des compresseurs, notamment des compresseurs pour machines frigorifiques (3) qui sont exposés avec leur boîtier (4) à une pression de système d'un fluide frigorigène (5) et qui sont graissés avec une huile de graissage et de blocage diluée par le contact avec le fluide frigorigène (5) à des passages d'arbre (7) vers le boîtier à des paliers (32) et qui sont rendus étanches par une garniture étanche de l'arbre (1, 2) contre un passage du fluide frigorigène (5), où pendant le fonctionnement du compresseur (3), une pompe à huile (8) fait augmenter la pression dans le système de blocage au moyen d'un conduit d'amenée (9) par la pression de système dans le boîtier (4) et alimente la garniture étanche de l'arbre (1, 2) continuellement en huile de blocage (6), **caractérisé en ce que** dans le conduit d'amenée (9), d'abord un conduit d'huile de graissage (22) avec un emplacement d'étranglement (31) part vers le palier (32) et qu'à la suite de la garniture étanche de l'arbre (1, 2), une vanne de retenue (21) est installée, **en ce que** la garniture étanche de l'arbre (1, 2) est conçue comme garniture d'arbre à effet double vers l'extérieur (10) et vers l'intérieur (11), et **en ce qu'**un espace intermédiaire (12) entre les garnitures étanches (1, 2) est relié par deux conduits d'écoulement séparés (13, 14) à un réservoir (15) géodésiquement plus haut, où un premier conduit d'écoulement (13) débouche dans la zone supérieure (16) du réservoir (15) et continue de là comme conduit de retour (17) dans un récipient collecteur (18) relié au boîtier (4), pendant qu'un deuxième conduit d'écoulement (14) débouche dans la zone inférieure (19) du récipient collecteur (15) pour, lors de l'arrêt de la pompe, disposer d'une réserve d'huile (20) s'écoulant par le deuxième conduit d'écoulement au-dessus des garnitures étanches (1, 2).

2. Système de graissage et de blocage selon la revendication 1, **caractérisé en ce que** le premier conduit d'écoulement (13) part dans la partie supérieure de l'espace intermédiaire (12) pour empêcher des bulles de gaz stationnaires, tandis que le second conduit d'écoulement (14) part dans la partie inférieure de l'espace intermédiaire (12) pour disposer, lors de l'arrêt, d'une colonne d'huile sans bulles de gaz dans la partie inférieure de l'espace intermédiaire.

3. Système de graissage et de blocage selon l'une des revendications 1 ou 2, **caractérisé en ce qu'**une section transversale la plus étroite (25) du second conduit d'écoulement (14) représente moins que la moitié d'une section transversale la plus étroite du premier conduit d'écoulement (13).

4. Système de graissage et de blocage selon la revendication 3, **caractérisé en ce que** la réserve d'huile (20) dans le réservoir (15) et la section transversale la plus étroite du second conduit d'écoulement (14) sont accordées l'une à l'autre de façon que lors de l'arrêt et d'une défaillance complète de la garniture étanche (2) vers l'intérieur (11), la réserve d'huile (20) requiert plus que 30 secondes pour se vider dans l'espace intermédiaire (12).

5. Système de graissage et de blocage selon l'une des revendications 1 à 4, **caractérisé en ce que** le réservoir présente une entrée tangentielle (26) pour le premier conduit d'écoulement (13) pour produire un cyclone, et **en ce que** le conduit d'écoulement (17) est disposé au milieu pour aspirer plus rapidement les composants plus légers.

6. Système de graissage et de blocage selon l'une des revendications 1 à 5, **caractérisé en ce qu'**un organe de surveillance de niveau (23) est installé dans le réservoir (15) qui produit un signal pour empêcher le démarrage ou pour l'arrêt du compresseur (3).

7. Système de graissage et de blocage selon l'une des revendications 1 à 4, **caractérisé en ce que** pour l'augmentation de la pression de blocage par la pression du système, une soupape de maintien de pression est incorporée dans le conduit de retour (17).

8. Système de graissage et de blocage selon l'une des revendications 1 à 7, **caractérisé en ce que** la garniture étanche est réalisée vers l'intérieur (11) comme garniture à lèvre (1a) et la garniture vers l'extérieur (10) comme garniture à anneau de glissement.

9. Système de graissage et de blocage selon l'une des revendications 1 à 7, **caractérisé en ce que** la garniture (1, 2) est réalisée comme garniture à anneau de glissement double.

10. Système de graissage et de blocage selon l'une des revendications 1 à 9, **caractérisé en ce que** plusieurs compresseurs, qui sont exposés aux passages d'arbre (7) à la même pression de système d'un fluide frigorigène (5), sont reliés avec leurs conduits d'écoulement (13, 14) à un réservoir commun et possèdent un récipient collecteur commun (18).

11. Compresseur pour machines frigorifiques avec un système de graissage et de blocage selon l'une des revendications 1 à 10.
